# EUROPÄISCHE PATENTSCHRIFT

(11) **EP 1 276 194 B1**
(45) Veröffentlichungstag und Bekanntmachung des Hinweises auf die Patenterteilung: **27.08.2008**
(21) Anmeldenummer: 02014150.3
(22) Anmeldetag: 25.06.2002
(51) Int. Cl.: H02G 3/04

(54) **Installationskanal mit Kabelrückhalteklammer**
Installation channel with cable retaining bracket
Canalisation d'installation avec étrier de retenue de cable

(30) Priorität: 03.07.2001 DE 20110987 U
(43) Veröffentlichungstag der Anmeldung: 15.01.2003
(73) Patentinhaber: REHAU AG + Co, 95111 Rehau (DE)
(72) Erfinder: Peetz, Matthias, 95111 Rehau (DE)

(56) Entgegenhaltungen:
- EP-A- 0 743 732
- DE-U- 8 704 502

## Beschreibung

Die Erfindung betrifft eine Kabelrückhalteklammer für den Einsatz in Installationskanälen gemäß dem Oberbegriff des Anspruches 1.

Um Leitungen oder Leitungsbündel innerhalb des U-förmigen Grundkörpers des Installationskanals zu halten, werden Halteklammern eingesetzt. Des weiteren dienen diese Halteklammert bei Metallkanälen zum Potentialausgleich zwischen Kanalunterteil und Abdeckung sowie zur Stabilisierung der Seitenteile des Kanalunterteils.

Bekannte Kabelkanäle werden nach dem Einlegen der Kabel mit einem Deckel verschlossen, der in Hinterschneidungen an der Außenseite der freien Enden der Seitenwände verrasten. Die in den Installationskanal eingelegten Kabel belasten die Seitenwände und drücken diese nach außen. Dadurch kann es zu Schwierigkeiten beim Aufsetzen und Verrasten des Deckels kommen. Um u. a. den durch die eingelegten Kabel belasteten Seitenwänden eine größere Stabilität zu geben, werden Kabelhalteklammern eingesetzt, die die Öffnung des Installationskanals überbrücken.

Bei Installationskanälen aus Metall sind eine Vielzahl von Kabelhalteklammern bekannt. Meist sind diese nur einseitig festgelegt, d.h., verrastet beziehungsweise eingekeilt zwischen Deckelbefestigung und Bodenfläche. Die andere Seite geht nur unter die Oberfläche oder endet als freier Arm ohne Abstützung. Bei frei endendem Arm ohne Abstützung ist ein ausreichendes Festhalten der Leitungen im Installationskanal nicht gegeben. Die Kabelhalteklammer biegt sich bei großer Belastung auf. Ein Herausrutschen der Leitungen beziehungsweise der Kabelbündel ist die Folge. Auch bei aufgerastetem Deckel bleibt das System instabil. Durch die Last der Belegung kann sich die Kabelhalteklammer und das Oberteil entriegeln.

Bei Kabelhalteklammern, die auf der einen Seite verrastet sind und die andere Seite unter die Verschlusskontur des Oberteiles greift, kann die Kabellast zwar abgefangen werden, jedoch gestaltet sich die Leitungsnachbelegung bei einem stark befüllten Installationskanal äußerst schwierig. Die Kabelbündel liegen auf der Halteklammer, die bei der Nachverlegung zur Freigabe hochgedrückt werden muss.

Aus der DE 87 04 502 U1 ist ein Wandkanal zur Aufnahme von elektrischen Installationseinrichtungen bekannt, der ein einseitig offenes metallisches Unterteil, dessen die Öffnung begrenzende Längsseiten mit nach außen weisenden Rinnen versehen sind, sowie ein plattenförmiges, die Öffnung des Unterteils abdeckendes metallisches Abdeckteil aufweist. Innerhalb der Rinnen sind metallische Klammern angeordnet, von denen jede einerseits am zugehörigen Ansatz des Abdeckteils und andererseits mit wenigstens einer als Schneide ausgebildeten Kontaktspitze an der Rinne des Unterteils anliegt. Die Klammer hat einen im wesentlichen U-förmigen Querschnitt. An einem der Schenkel sind seitliche Ansätze vorgesehen, die mit unteren und oberen Spitzen versehen sind. Am anderen Schenkel ist eine Kontaktspitze angeordnet, die etwa lotrecht absteht und deren Spitze als Schneide ausgebildet ist.

Der Abstand der oberen und unteren Spitzen ist derart gewählt, dass die Klammer zwischen den Wänden des Ansatzes eingeklemmt und damit am Abdeckteil gehalten ist. Die Spitzen der Klammer dringen in die Wände ein und bilden dadurch einen sicheren Halt sowie eine sichere elektrische Verbindung zwischen Abdeckteil und Klammer einerseits und anderseits zwischen Klammer und Unterteil.

In der EP-A-0 743 732 ist ein Installationskanal mit einer Kabelrückhalteklammer offenbart, bestehend aus einem annähernd U-förmigen Grundkörper zur Aufnahme von Leitungen, der durch einen Deckel verschließbar ist. Die Kabelrückhalteklammern verhindern bei geöffnetem Kanal ein Heraustreten der Leitungen. Die Kabelrückhalteklammern bestehen aus einem Stegbereich, an den an beiden Seiten zungenförmige Bereiche angeordnet sind, wobei diese aus einem unteren Bereich und eine im Abstand zu diesem angeordneten oberen Zungen bestehen. Dazwischen ist eine kontaktspitzenaufweisende Zunge angeordnet.

Die Erfindung stellt sich daher die Aufgabe, einen Installationskanal mit Kabelrückhalteklammern der eingangs genannten Gattung anzugeben, wobei die Kabelrückhalteklammern so ausgeführt sind, dass die vorbeschrieben Nachteile beseitigt werden und auch bei starker Belegung des Installationskanals jederzeit in einfacher Art und Weise eine Nachbelegung möglich ist. Einerseits soll die montierte Kabelrückhalteklammer bei Bedarf in die gewünschte Position verschiebbar sein und ein Heraustreten der in den Installationskanal eingelegten Kabel verhindern. Andererseits soll sichergestellt werden, dass sie bei geschlossenem Deckel nicht verrücken kann. Sie soll möglichst einfach lösbar sein, um nachträglich nach Kabel einlegen zu können.
Des weiteren soll die Kabelrückhalteklammer dem belegten Installationskanal eine ausreichende Steifigkeit geben, so dass der Deckel mit ausreichender Klemmkraft aufgerastet werden kann.

Erfindungsgemäß wird die Aufgabe durch die kennzeichnenden Merkmale des Anspruches 1 gelöst.
Bei dem Installationskanal sind die Seitenwände des U-förmigen Grundkörpers mit nach innen gerichteten Umkragungen versehen, wobei die Kabelrückhalteklammern mit ihren an den Endbereichen angeordneten Zungen die Umkragungen der Seitenwände umgreifen.

Die Kabelhalteklammer besteht aus beidseitig an einen Steg angeordneten zungenförmigen Bereichen. Die zungenförmigen Bereiche können zum einen so ausgebildet sein, dass die untere mittlere Zunge die Umkragungen der Seitenwände untergreift, zum anderen kommen die oberen äußeren Zungen auf der Umkragung zum liegen. Zwischen mittlerer und äußerer Zunge ist jeweils freigeschnitten eine am Ende spitz zulaufende weitere Zunge angeordnet. Diese ist derart aufgebogen, dass sich die Spitzen beim Aufsetzen des Deckels in diesen einschneiden und so eine sichere Kontaktierung bewirken.

Die Erfindung soll anhand eines Ausführungsbeispiels näher erläutert werden.

Es zeigen:
- Figur 1: Kabelrückhalteklammer
- Figur 2: Draufsicht der Kabelrückhalteklammer
- Figur 3: Ausschnitt aus dem erfindungsgemäßen Installationskanal

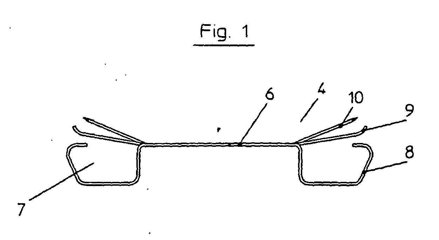

Die Kabelrückhalteklammer 4 - Fig. 1 - besteht aus einem Stegbereich 6, an dem an beiden Seiten jeweils zungenförmige Bereiche 7 angeordnet sind. Diese bestehen aus einer mittig angeordneten unteren Zunge 8, die die nach innen gerichteten Umkragungen 3 der Seitenwände 2 untergreifen.

Die unteren Zungen 8 sind dabei so ausgeführt, dass sie mit ihren Endbereichen nach innen eingerollt sind, wobei diese Endbereiche im eingebauten Zustand in die Endbereiche der nach innen gerichteten Umkragungen 3 eingreifen. Die oberen Zungen 9 liegen auf der Umkragung 3 an.

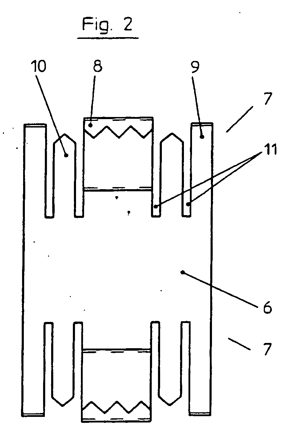

Zwischen der unteren Zunge 8 und den beiden oberen Zungen 9 sind jeweils Kontaktspitzen 10 derart angeordnet, dass diese die oberen Zungen 9 überragen. Zwischen unterer Zunge 8, Kontaktspitze 10 sowie oberer Zunge 9 sind jeweils Freischnitte 11 (Fig. 2) angeordnet.

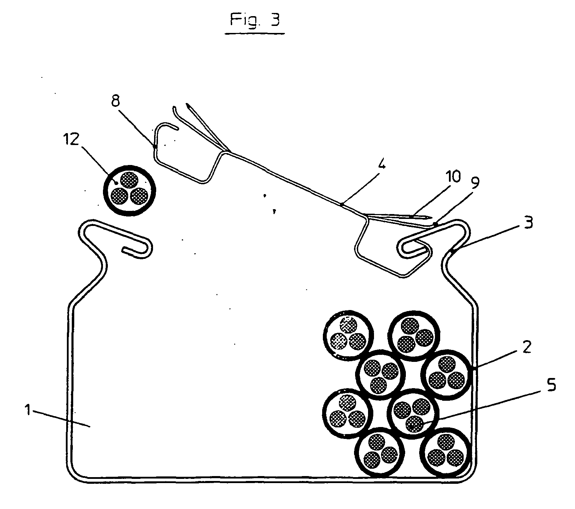

Der Installationskanal - Fig. 3 - besteht im wesentlichen aus einem U-förmigen metallischen Kanalunterteils 1, an dessen Seitenwänden 2 nach innen gerichtete Umkragungen 3 angeordnet sind.
Nach der Montage des Installationskanals an einer Wand, werden in diesen Leitungen bzw. Leitungsbündel 5 eingebracht. Um ein Heraustreten der Leitungen bzw. Leitungsbündel 5 zu verhindern, werden die Kabelrückhalteklammern 4 eingesetzt. Diese bestehen aus an einem Steg 6 beidseitig angeordneten zungenförmigen Bereichen. Die zungenförmigen Bereiche 7 weisen je eine untere Zunge 8 und zwei obere Zungen 9 auf. Beim Einsetzen der Kabelrückhalteklammern 4 umgreifen die Zungen 8 und 9 die Umkragungen 3 der Seitenwände 2 des Kanalunterteils 1.
Der auf das Kanalunterteil 1 aufzusetzende Deckel weist einen annähernd C- förmigen Querschnitt auf. Die Endbereiche des Deckels korrespondieren mit den Endbereichen der Seitenwände 2 des Kanalunterteils 1. Dadurch erfolgt beim Aufsetzen des Deckels eine Verrastung mit dem Kanalunterteil 1.
Die nach oben gerichteten Kontaktspitzen 10 schneiden sich beim Aufsetzen des Deckels in diesen ein und durchdringen auch jegliche Farbschichten oder Lackierungen. Es wird somit in jedem Fall eine zuverlässige elektrische Verbindung (Potentialausgleich) gewährleistet.
Bei einer Nachbelegung des Installationskanals wird nach dem Entfernen des Deckels die Kabelrückhalteklammer 4 einseitig ausgehängt (Fig. 3). Die nachzuinstallierende Leitung 12 kann eingelegt werden und muss nicht mehr durchgefädelt werden. Die Kabelrückhalteklammer 4 ist so ausgeführt, dass sie auch dann im Installationskanal hält, wenn sie einseitig im Installationskanal eingreift und zudem noch soweit nach außen gebogen werden kann, dass die nachzuinstallierenden Leitungen 12 eingelegt werden können.
Die Kabelrückhalteklammern 4 bieten dabei den bereits eingelegten Leitungen 5 noch soviel Halt im Installationskanal, dass diese nicht herausfallen können.
Nach diesem Verlegevorgang ist die Kabelrückhalteklammer durch Verschieben wieder problemlos auf der offenen Seite zu verrasten, so dass die Seitenwände 2 wieder Stabilisiert werden und mit dem Aufsetzen des Deckels auch der Potentialausgleich wieder gegeben ist.

### Bezugszeichen

- 1 -: Kanalunterteil
- 2 -: Seitenwände
- 3 -: Umkragung
- 4 -: Kabelrückhalteklammer
- 5 -: Leitungen
- 6 -: Steg
- 7 -: zungenförmige Bereiche
- 8 -: untere Zunge
- 9 -: obere Zungen
- 10 -: Kontaktspitzen
- 11 -: Freischnitte
- 12 -: nachzuinstallierende Leitung

## Patentansprüche

1. Installationskanal mit Kabelrückhalteklammer, die für den Einsatz in Installationskanälen, die einen annähernd U-förmigen Grundkörper zur Aufnahme von Leitungen zur Übertragung von elektrischem Strom, optischen Signalen und/oder dergleichen aufweisen und durch einen Deckel verschließbar sind, wobei die Kabelrückhalteklammem bei geöffnetem Kanal ein Heraustreten der Leitungen verhindern, dass die Kabelrückhalteklammer (4) aus einem Stegbereich (6), an den an beiden Seiten zungenförmigen Bereiche (7) angeordnet sind, wobei diese aus einer mittig angeordneten unteren Zunge (8) und jeweils zwei im Abstand zu dieser angeordneten oberen Zungen (9) besteht und zwischen diesen jeweils nach oben gerichtete Kontaktspitzen (10) angeordnet sind,
**dadurch gekennzeichnet,**
**dass** die unteren Zungen (8) derart ausgebildet sind, dass sie in ihren Endbereichen eingerollt ausgeführt sind und diese in die Endbereiche der nach innen gerichteten Umkragungen (3) eingreifen und dass zwischen unterer Zunge (8), Kontaktspitze (10) sowie oberer Zunge (9) jeweils Freischnitte (11) angeordnet sind.

2. Installationskanal mit Kabelrückhalteklammern nach Anspruch 1, **dadurch gekennzeichnet, dass** zwischen der unteren Zunge (8) und den oberen Zungen (9) jeweils Kontaktspitzen (10) derart angeordnet sind, dass diese die oberen Zungen (9) überragen,

3. Installationskanal mit Kabelrückhalteklammern nach Anspruch 1 bis 2, die untere Zunge (8) und die oberen Zungen (9) jeweils die nach innen gerichteten Umkragungen (3) der Seitenwände (2) des Kanalunterteils (1) umgreifen.

## Claims

1. Installation duct with cable-retaining clips for use in installation ducts which have an approximately U-shaped base body for accommodating lines for transmitting electrical current, optical signals and/or the like and can be closed by a cover, with the cable-retaining clips preventing the lines escaping when the duct is open, with the cable-retaining clips (4) comprising a crosspiece region (6), on both sides of which tongue-like regions (7) are arranged, these tongue-like regions comprising a centrally arranged lower tongue (8) and in each case two upper tongues (9) which are arranged at a distance from the said lower tongue, and in each case upwardly directed contact tips (10) being arranged between the said lower tongue and upper tongues,
**characterized**
**in that** the lower tongues (8) are formed in such a way that they are of rolled-in design in their end regions and these end regions engage in the end regions of the inwardly directed circumferential projections (3), and in that clearances (11) are in each case arranged between the lower tongue (8), contact tip (10) and upper tongue (9).

2. Installation duct with cable-retaining clips according to Claim 1, **characterized in that** contact tips (10) are in each case arranged between the lower tongue (8) and the upper tongues (9) in such a way that these contact tips (10) project beyond the upper tongues (9).

3. Installation duct with cable-retaining clips according to Claims 1 and 2, **characterized in that** the lower tongue (8) and the upper tongues (9) in each case engage around the inwardly directed circumferential projections (3) of the side walls (2) of the lower part (1) of the duct.

## Revendications

1. Canalisation d'installation avec étriers de retenue de câble pour l'utilisation dans des canalisations d'installation, qui présentent un corps de base approximativement en forme de U pour recevoir des conduites de transmission de courant électrique, de signaux optiques et/ou similaires, et qui peuvent être fermés par un couvercle, les étriers de retenue de câble empêchant que les conduites ne ressortent de la canalisation lorsqu'elle est ouverte, les étriers de retenue de câble (4) se composant d'une partie d'âme (6) sur laquelle sont disposées des deux côtés des parties en forme de langues (7), celles-ci se composant d'une langue inférieure (8) disposée centralement et de deux langues supérieures (9) disposées à distance de celle-ci et entre lesquelles sont disposées des pointes de contact (10) orientées respectivement vers le haut,
**caractérisée en ce que**
les langues inférieures (8) sont réalisées de telle sorte qu'elles soient enroulées dans leurs parties d'extrémité et qu'elles viennent en prise dans les parties d'extrémité des bords recourbés vers l'intérieur (3), et **en ce qu'**entre la langue inférieure (8), la pointe de contact (10) ainsi que la langue supérieure (9) sont disposées à chaque fois des entailles (11).

2. Canalisation d'installation avec étriers de retenue de câble selon la revendication 1, **caractérisée en ce qu'**entre la langue inférieure (8) et les langues supérieures (9) sont disposées à chaque fois des pointes de contact (10) de telle sorte qu'elles dépassent des langues supérieures (9).

3. Canalisation d'installation avec étriers de retenue de câble selon les revendications 1 à 2, **caractérisée en ce que** la langue inférieure (8) et les langues supérieures (9) viennent en prise à chaque fois autour des bords recourbés vers l'intérieur (3) des parois latérales (2) de la partie inférieure de la canalisation (1).
